# EUROPÄISCHE PATENTSCHRIFT

(11) **EP 1 117 941 B1**
(45) Veröffentlichungstag und Bekanntmachung des Hinweises auf die Patenterteilung: **19.03.2003**
(21) Anmeldenummer: 99950586.0
(22) Anmeldetag: 01.10.1999
(51) Int. Cl.: F16B 23/00, B25B 15/00

(54) **SCHRAUBE UND SCHRAUBENDREHER FÜR EINE ABRUTSCHSICHERE SCHRAUBE/ SCHRAUBENDREHER-PAARUNG**
SCREW AND SCREWDRIVER FOR A NON-SLIP SCREW/SCREW DRIVER PAIRING
VIS ET TOURNEVIS PERMETTANT UN ACCOUPLEMENT VIS/TOURNEVIS SANS DERAPAGE

(30) Priorität: 06.10.1998 DE 19845939; 09.06.1999 DE 19926134
(43) Veröffentlichungstag der Anmeldung: 25.07.2001
(73) Patentinhaber: Edler von der Planitz, Lutz, 95448 Bayreuth (DE)
(72) Erfinder: Edler von der Planitz, Lutz, 95448 Bayreuth (DE)
(86) Internationale Anmeldenummer: EP9907269
(87) Internationale Veröffentlichungsnummer: WO00020766

(56) Entgegenhaltungen:
- WO-A-94/17961
- FR-A- 2 562 180

## Beschreibung

Die Erfindung betrifft einen Schraubendreher für Schlitzschrauben, eine Schraube und ein Steckverbindungssystem mit einem Schraubendreher und einer Schraube.

Bei bekannten Systemen der Verbindung von Schraubendreher und Schraube ist neben dem nötigen Kraftaufwand für das Drehen der Schraube weiterer Kraftaufwand erforderlich, um den Schraubendreher im Schlitz des Schraubenkopfes zu halten. Beim Hineindrehen der Schraube nimmt dieser weitere Kraftaufwand zu, zugleich erhöht sich das Risiko, daß gerade das Gegenteil, nämlich ein Verschieben der Achsen von Schraubendreher und Schraube gegeneinander erreicht wird, was zu einem Herausrutschen des Schraubendrehers aus dem Schlitz des Schraubenkopfes führen kann, auch zu einer Beschädigung des Schlitzes führen kann, die ein weiteres Hinein- oder Herausdrehen der Schraube aus dem Werkstück erschwert, wenn nicht unmöglich macht.

Aus der US-PS 4 538 846 ist eine abrutschsichere Schraube mit einem Kopf bekannt, in dem ein zentraler durchgehender Schlitz mit oberhalb der Ebene des Schlitzbodens radial nach außen divergierenden, axial gerichteten Flanken ausgebildet ist. An den Schlitz schließen Hinterschneidungen an, die durch je ein Paar geneigter Flächen gebildet sind, die mit einem Paar schwalbenschwanzförmiger Nasen an einer Klinge eines speziellen Schraubendrehers zusammenwirken. Bei derartigen Schrauben erfolgt die Verbindung von Schraubendreher und Schraube oberhalb der Ebene des herkömmlichen Schlitzbodens. Derartige Schrauben sind aufwendig herzustellen. Der Schraubendreher weist scharfkantige Nasen auf, die beim Drehen der Schraube zur Kraftübertragung am Schraubenkopf anliegen, mit hoher örtlicher Pressung des Schraubendrehers auf den sich oberhalb der Ebene des Schlitzbodens befindenden Bereich des Schraubenkopfes, einem Bereich, in dem der Schraubenkopf nur wenig Masse aufweist. Dadurch besteht ein erhebliches Risiko, daß der Schlitz des Schraubenkopfes beim Hinein- oder Herausdrehen der Schraube verformt, beschädigt oder zerstört wird und ein weiteres Hinein- oder Herausdrehen der Schraube kaum noch oder gar nicht mehr möglich ist.

Aus FR 2 562 180 A ist eine Schlitzschraube mit zwei am Kopf diametral gegenüberliegenden, im Querschnitt schwalbenschwanzförmigen Schlitzabschnitten bekannt, die durch eine zentrale Zwischenwand getrennt sind. Die Schlitzabschnitte übernehmen sowohl die Funktion "Drehmoment übertragen" als auch die Funktion "Rückhalten des Schraubendrehers". Die Flanken der Schlitzabschnitte müssen daher eine Neigung haben, die sich als Kompromiß zwischen diesen beiden Funktionen ergibt. Der zugehörige Schraubendreher greift ausschließlich mit zwei im Querschnitt schwalbenschwanzförmigen Nasen in die zugehörigen Schlitzabschnitte der Schlitzschraube ein.

Die aus WO 94/17961 A bekannte Schraube weist Hinterschneidungen in einem diametral durchgehenden Schlitz auf, die oberhalb der Aufstandsfläche eines zugehörigen Schraubendrehers liegen und sowohl zum Rückhalten des Schraubendrehers als auch zum Übertragen von Drehmoment dienen.

Demgegenüber weist
- die erfindungsgemäße Schraube einen diametral durchgehenden Schlitz auf, der an einander diametral gegenüberliegenden Schlitzabschnitten nach unten in Hinterschneidungen übergeht, die an der Unterseite des Kopfes offen sind. Dabei ist dem Schlitz speziell das Übertragen von Drehmoment und den Hinterschneidungen speziell das Rückhalten des Schraubendrehers zugewiesen, so daß die genannten Funktionen getrennt sind,
- der erfindungsgemäße Schraubendreher seitliche Verlängerungen mit Nasen zum Eingreifen in den diametral durchgehenden Schlitz auf. Der Schraubendreher kann sehr weit in die Schraube eingesteckt werden, die Verlängerungen mit Nasen bewirken beim Drehen der Schraube eine Verbindung von Schraubendreher und Schraube unterhalb des Schlitzbodens der herkömmlichen Schlitzschraube an der durch Hinterschneidungen vollständig geöffneten Unterseite des Schraubenkopfes und ausschließlich die Seitenflächen der Schraubendreherklinge dienen durch Anliegen an den Seitenflächen des Schlitzes der Übertragung von Drehmoment. Über die Nasen erfolgt ausschließlich die Verzahnung von Schraubendreher und Schraube, keine Kraftübertragung.

Aufgabe der Erfindung ist es, einen Schraubendreher und eine Schraube für ein Steckverbindungssystem zu schaffen, bei dem Kraftaufwand zum Verhindern eines Verschiebens der Achsen von Schraubendreher und Schraube nahezu vollständig reduziert und ein Herausrutschen des Schraubendrehers aus dem Schraubenkopf verhindert ist.

Die Aufgabe ist erfindungsgemäß durch einen Schraubendreher gemäß Anspruch 1, eine Schraube gemäß Anspruch 2 und ein Steckverbindungssystem gemäß Anspruch 3 gelöst.

Wesentliche Merkmale der erfindungsgemäßen Lösung sind :
- der Schlitzboden der herkömmlichen Schlitzschraube ist maßgebliche Ebene für die Verbindung von Schraubendreher und Schraube,
- die Schraubendreherklinge liegt auf dem Schlitzboden der herkömmlichen Schlitzschraube auf,
- die Verbindung von Schraubendreher und Schraube erfolgt unterhalb des Schlitzbodens an der Unterseite des Schraubenkopfes,
- die Unterseite des Schraubenkopfes ist durch Einkerbungen / Hinterschneidungen vollständig geöffnet, um zu verhindern, daß im oberen Bereich oder inmitten des Schraubenkopfes angelegte und in ihrem Ausmaß im wesentlichen auf die Aufnahme der Nasen ausgerichteten Widerlager durch Fremdstoff funktionsunfähig werden,
- seitliche Verlängerungen des Schraubendrehers, an denen sich Nasen befinden, die beim Drehen der Schraube ( Hinein- wie Herausdrehen ) die Verzahnung von Schraubendreher und Schraubenkopf bewirken, ermöglichen ein weites Ineinandergreifen von Schraubendreher und Schraube,
- vollflächige gemeinsame seitliche Auflagefläche von Schraubendreherklinge und Schraubenkopfschlitz verbessern die Kraftübertragung, verringern das Risiko einer Beschädigung des Schraubenkopfschlitzes beim Drehen der Schraube und erhöhen die Stabilität der Verbindung von Schraubendreher und Schraubenkopf,
- die Verzahnung von Schraubendreher und Schraubenkopf erfolgt über Nasen, die an den Verlängerungen des Schraubendrehers angebracht sind und nur dazu dienen, ein Hinausrutschen des Schraubendrehers aus dem Schraubenkopf zu verhindern,
- die Nasen an den Verlängerungen des Schraubendrehers berühren mit ihren Seitenflächen beim Drehen der Schraube den Schraubenkopf nicht,
- die Nasen dienen nicht der Kraftübertragung,
- die Abschrägungen des äußeren Bereichs der Verlängerungen des Schraubendrehers und der Nasen verhindern, daß der Schraubendreher beim Hineinund Herausdrehen der Schraube das Werkstück berührt, bevor der Schraubenkopf dies kann.

Die erfindungsgemäße Verbindung von Schraubendreher und Schraube erfolgt damit unterhalb der Ebene des Schlitzbodens des herkömmlichen Schraubenkopfes an der offenen Unterseite des Schraubenkopfes.

Schraubendreher und Schraube sind kostengünstig produzierbar , der Schraubenkopf mit deutlicher Materialeinsparung gegenüber der herkömmlichen Schlitzschraube.

Für die Beurteilung der Erfindung im Verhältnis zum Stand der Technik ist die Ebene des Auflagebereichs des Schraubendrehers im Schlitz des Schraubenkopfes bzw. die Ebene der Auflagefläche des Schlitzes des Schraubenkopfes von zentraler Bedeutung. Bekannt sind den Schraubendreher rückhaltende Verbindungen von Schraubendreher und Schraube in demjenigen Bereich des Schraubenkopfes, der sich oberhalb des Auflagebereichs der Schraubendreherklinge im Schraubenkopfschlitz, des Schlitzbodens bzw. oberhalb der Auflagefläche des Schraubenkopfschlitzes, des Schlitzbodens befindet sowie eine Verbindung, die die Schraubendreherklinge maximal oberhalb des Schlitzbodens des herkömmlichen Schraubenkopfes auf der oberen Außenfläche des Schraubenkopfes aufsetzt.

Demgegenüber ist erfindungsgemäß eine den Schraubendreher rückhaltende Verbindung von Schraubendreher und Schraube in demjenigen Bereich des Schraubenkopfes möglich, der sich an der Unterseite des Schraubenkopfes und unterhalb des Auflagebereichs der Schraubendreherklinge im Schraubenkopfschlitz bzw. unterhalb des Schlitzbodens des Schraubenkopfes befindet.

Das weite Ineinandergreifen von Schraubendreher und Schraube, wie auch die großen gemeinsamen seitlichen Auflageflächen von Schraubendreherklinge und Schraubenkopfschlitz beim Hinein- und Herausdrehen der Schraube bewirken eine wirkungsvolle mechanische Unterstützung beim Halten der Achse des Schraubendrehers koaxial zur Achse der Schraube bzw. des Schraubendrehers im Schraubenkopfschlitz. Dies vermeidet unnötigen Kraftaufwand, um ein Verschieben der Achsen gegeneinander zu verhindern und hält beim Hinein- wie Herausdrehen der Schraube den Schraubendreher im Schraubenkopfschlitz.

Bei bekannten Verbindungen von Schraubendreher und Schraube ist - neben dem für die Drehbewegung selbst nötigen Kraftaufwand - ein weiterer erheblicher Kraftaufwand erforderlich, um die Achse des Schraubendrehers koaxial zur Achse der Schraube und den Schraubendreher im Schlitz des Schraubenkopfes zu halten - gleichgültig ob das Hinein- oder Herausdrehen der Schraube bei bekannten Systemen z. B. durch Stern- oder Mehrkantschraubendreher oder durch magnetische Wirkung mit entsprechender Konstruktion des Schraubenkopfschlitzes unterstützt wird. Erfindungsgemäß erübrigt sich dieser Kraftaufwand nahezu vollständig.

Durch die Aufnahme der Nasen in die als Widerlager wirkenden Einkerbungen an der Unterseite des Schraubenkopfes und unterhalb des Schlitzbodens des Schraubenkopfes beim Hinein- und Herausdrehen der Schraube, ist ein Herausrutschen des Schraubendrehers aus dem Schraubenkopfschlitz nicht mehr möglich.

Weil die Nasen nicht der Kraftübertragung dienen und durch die vollflächige gemeinsame seitliche Auflagefläche von Schraubendreherklinge und Schraubenkopfschlitz ist das Risiko nahezu ausgeschlossen, daß es beim Hinein- oder Herausdrehen der Schraube zu Beschädigungen des Schraubenkopfschlitzes durch den Schraubendreher kommt, die ein weiteres Hinein- oder Herausdrehen der Schraube erschweren, wenn nicht unmöglich machen würden.

Im Gegensatz zu der erfindungsgemäßen Konstruktion von Schraube und Schraubendreher erfolgt bei den bekannten Schraube / Schraubendreher-Paarungen
1. die Verbindung von Schraubendreher und Schraube
   - oberhalb der Ebene des Schlitzbodens der herkömmlichen Schlitzschraube,
   - z.T auf einer mittig angeordneten Zentrierwand der oberen Außenfläche des Schraubenkopfes,
   - nicht über seitliche Verlängerungen des Schraubendrehers und dort angebrachte Nasen,
   - nicht an der vollständig offenen Unterseite des Schraubenkopfes,
2. die Kraftübertragung über die Nasen bzw. auch über die Nasen.

Bei den bekannten Schraube/Schraubendreher-Paarungen sind die Funktionen "Drehmoment übertragen" und "Rückhalten des Schraubendrehers" stets einem einzigen Konstruktionselement, nämlich den Hinterschneidungen, zugewiesen.

Demgegenüber wird erfindungsgemäß die Funktion "Drehmoment übertragen" von den Seitenflächen eines diametral durchgehenden Schlitzes der Schraube sowie den Seitenflächen der Schraubendreherklinge übernommen, während die zweite Funktion "Rückhalten des Schraubendrehers" unter dem Schlitz angeordneten, die Unterseite des Schraubenkopfes vollständig öffnenden Hinterschneidungen sowie Nasen des Schraubendrehers zugeordnet ist.

Für eine derartige Trennung der genannten Funktionen gibt keine der genannten Druckschriften, selbst bei Kombination mit einer anderen Druckschrift, einen Hinweis.

Ein Ausführungsbeispiel der Erfindung wird im folgenden anhand der beigefügten schematischen Zeichnungen näher beschrieben. Es zeigt:

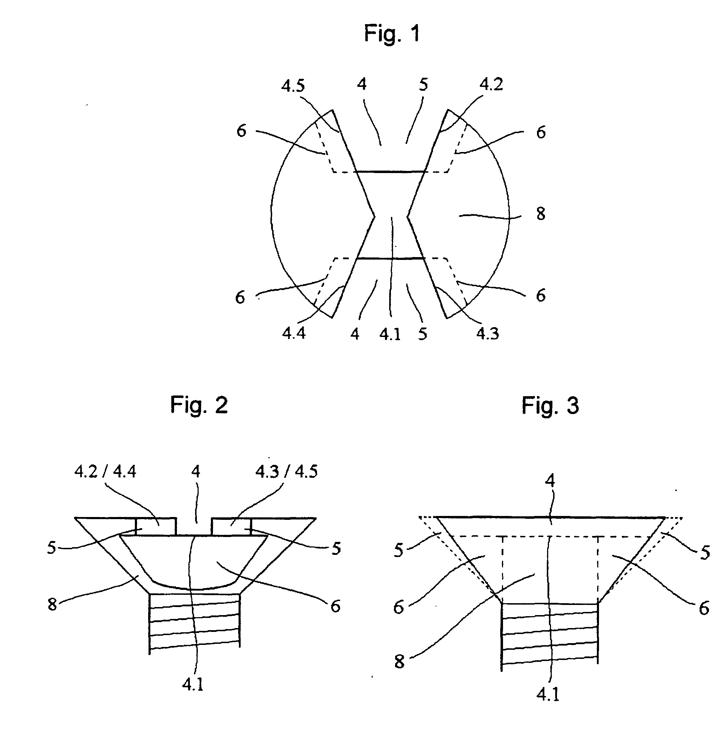

**Fig. 1:** die Draufsicht der herkömmlichen Schlitzschraube ( hier einer Senkkopfschraube ) mit
   - dem Schlitz 4 des Schraubenkopfes 8 der herkömmlichen Schlitzschraube,
   - der Auflagefläche ( dem Schlitzboden ) 4.1 des Schlitzes 4 der herkömmlichen Schlitzschraube,
   - den als Verbreiterungen 5 oberhalb der Auflagefläche ( dem Schlitzboden) 4.1 des Schlitzes 4 der herkömmlichen Schlitzschraube von der Mitte der Seitenflächen 4.2, 4.3 und 4.4, 4.5 Schlitzes 4 an nach beiden Seiten verbreiterten Schlitz 4,
   - den Seitenflächen 4.2, 4.3, 4.4 und 4.5 des verbreiterten Schlitzes 4 der herkömmlichen Schlitzschraube,
   - den unterhalb der Auflagefläche ( des Schlitzbodens ) 4.1 des Schlitzes 4 der herkömmlichen Schlitzschraube die Unterseite des Schraubenkopfes völlig öffnenden Einkerbungen 6,
   - dem Schraubenkopf 8.
**Fig. 2** : eine Seitenansicht der herkömmlichen Schlitzschraube ( hier einer Senkkopfschraube ) mit
   - dem Schlitz 4 des Schraubenkopfes 8 der herkömmlichen Schlitzschraube,
   - der Auflagefläche ( dem Schlitzboden ) 4.1 des Schlitzes 4 der herkömmlichen Schlitzschraube,
   - den als Verbreiterungen 5 oberhalb der Auflagefläche ( dem Schlitzboden) 4.1 des Schlitzes 4 der herkömmlichen Schlitzschraube von der Mitte der Seitenflächen 4.2, 4.3 und 4.4, 4.5 des Schlitzes 4 an nach beiden Seiten verbreiterten Schlitz 4,
   - zwei Seitenflächen 4.4 und 4.3 bzw. 4.2 und 4.5 des verbreiterten Schlitzes 4 der herkömmlichen Schlitzschraube,
   - den unterhalb der Auflagefläche ( des Schlitzbodens ) 4.1 des Schlitzes 4 der herkömmlichen Schlitzschraube die Unterseite des Schraubenkopfes völlig öffnenden Einkerbungen 6,
   - dem Schraubenkopf 8 der herkömmlichen Schlitzschraube.
**Fig. 3 :** eine Seitenansicht der herkömmlichen Schlitzschraube ( hier einer Senkkopfschraube ), gegenüber Fig. 2 um 90° um die Achse der Schraube gedreht, mit
   - dem Schlitz 4 des Schraubenkopfes 8 der herkömmlichen Schlitzschraube,
   - der Auflagefläche ( dem Schlitzboden ) 4.1 des Schlitzes 4 der herkömmlichen Schlitzschraube,
   - den als Verbreiterungen 5 oberhalb der Auflagefläche ( dem Schlitzboden ) 4.1 des Schlitzes 4 der herkömmlichen Schlitzschraube von der Mitte der Seitenflächen 4.2, 4.3 und 4.4, 4.5 des Schlitzes 4 an nach beiden Seiten verbreiterten Schlitz 4,
   - den unterhalb der Auflagefläche ( des Schlitzbodens ) 4.1 des Schlitzes 4 der herkömmlichen Schlitzschraube die Unterseite des Schraubenkopfes völlig öffnenden Einkerbungen 6
   - dem Schraubenkopf 8.

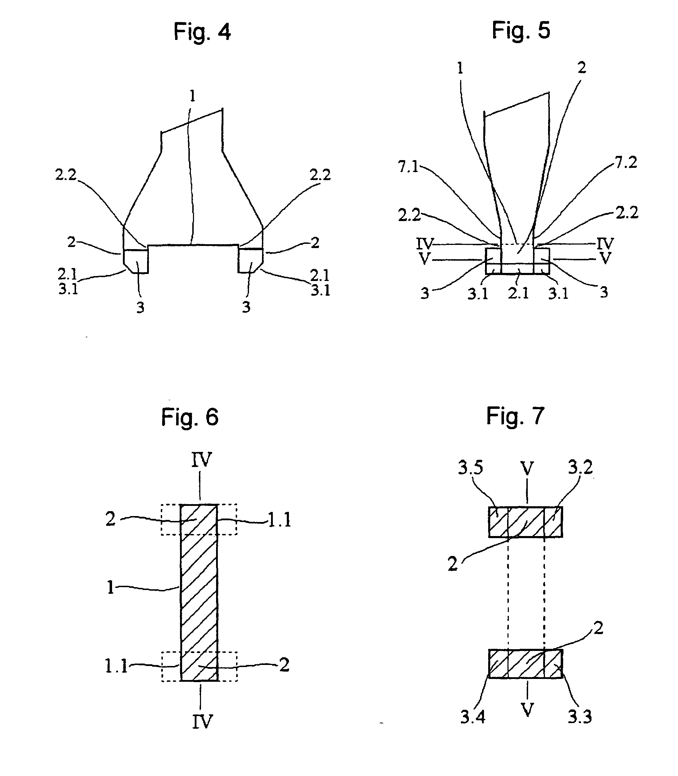

**Fig. 4** : eine Seitenansicht des Schraubendrehers mit
   - dem Auflagebereich 1 der Schraubendreherklinge auf dem Schlitzboden 4.1 des Schraubenkopfes,
   - den beiden seitlichen Verlängerungen 2 des Schraubendrehers,
   - der Abschrägung 2.1 der Außenkanten der seitlichen Verlängerungen 2 des Schraubendrehers,
   - den die seitlichen Verlängerungen 2 des Schraubendrehers jeweils beiderseits verstärkenden Nasen 3,
   - dem Abstand 2.2, in dem die Nasen 3 zur Ebene des Auflagebereichs 1 der Schraubendreherklinge an den Verlängerungen 2 angesetzt sind,
   - der Abschrägung 3.1 der Außenkanten der Nasen 3.
**Fig. 5** : eine Seitenansicht des Schraubendrehers, um 90° gedreht gegenüber Fig. 4, mit
   - den in Fig. 4 gezeigten Merkmalen und den in Fig. 6 und 7 dargestellten Schnitten IV - IV und V - V und
   - den beiden an jeweils zwei Seitenflächen 4.2, 4.4 bzw. 4.3, 4.5 des Schlitzes des Schraubenkopfes beim Hinein- bzw. Herausdrehen der Schraube anliegenden Seitenflächen 7.1 und 7.2 des Schraubendreherklinge.
**Fig. 6** : den Schnitt IV - IV des Schraubendrehers nach Fig. 5 mit
   - der Ebene des Bereichs des Schraubendreherklinge IV - IV, in der sich der Auflagebereich 1 der Schraubendreherklinge auf dem Schlitzboden 4.1 des Schlitzes des Schraubenkopfes befindet,
   - der Bereich 1.1 der Ebene IV - IV, in dem die seitlichen Verlängerungen 2 des Schraubendrehers angesetzt sind.
**Fig. 7** : den Schnitt V - V des Schraubendrehers nach Fig. 5 mit
   - den beiden Verlängerungen 2 des Schraubendrehers,
   - den die Verlängerungen 2 verstärkenden Nasen 3.2, 3.3, 3.4 und 3.5.

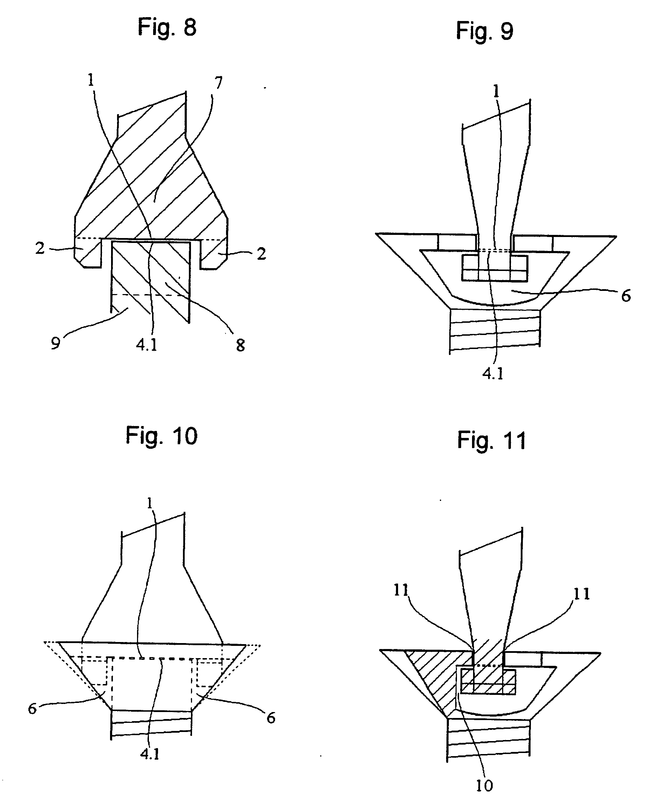

**Fig. 8** : einen Axialschnitt des Steckverbindungssystems mit einem Schraubendreher und einer Schraube mit den in Fig. 4 gezeigten Merkmalen und
   - der Schraubendreherklinge 7,
   - dem Schraubenkopf 8,
   - dem Schraubenschaft 9 und
   - der Auflagefläche ( dem Schlitzboden ) 4.1 des Schlitzes 4 der herkömmlichen Schlitzschraube
   - dem Auflagebereich 1 der Schraubendreherklinge auf dem Schlitzboden 4.1 des Schraubenkopfes.
**Fig. 9** : eine Seitenansicht des Steckverbindungssystems mit einem Schraubendreher und einer Schraube und den in Fig. 2 und 5 gezeigten Merkmalen.
**Fig. 10 :** eine Seitenansicht des Steckverbindungssystems mit einem Schraubendreher und einer Schraube und den in Fig. 3 und 4 gezeigten Merkmalen.
**Fig. 11** : eine Seitenansicht des Steckverbindungssystems mit einem Schraubendreher und einer Schraube in Rechtsdrehung ( Hineindrehen ) und
   - dem Abstand 10 der Seitenflächen der Nasen vom Schraubenkopf beim Drehen der Schraube und
   - dem vollflächigen Aneinanderliegen 11 der Seitenflächen 7.1 und 7.2 der Schraubendreherklinge und der Seitenflächen 4.2 und 4.4 des verbreiterten Schlitzes der Schraube beim Hineindrehen der Schraube.

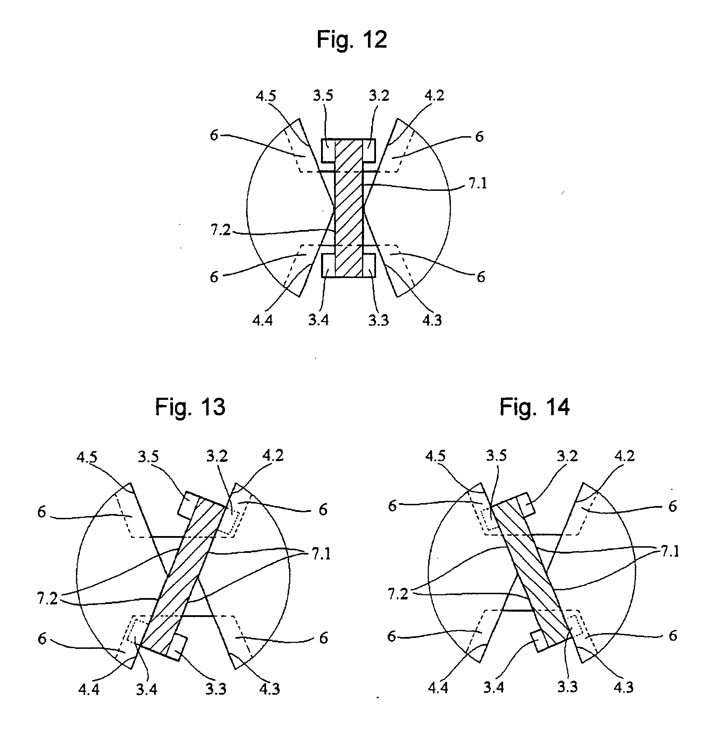

**Fig. 12** : eine Draufsicht des Steckverbindungssystems mit einem Schraubendreher und einer Schraube mit
   - den die seitlichen Verlängerungen des Schraubendrehers jeweils beiderseits verstärkenden Nasen 3.2, 3.3, 3.4 und 3.5,
   - den Seitenflächen 4.2, 4.3, 4.4 und 4.5 des verbreiterten Schlitzes der herkömmlichen Schlitzschraube,
   - den unterhalb der Auflagefläche ( des Schlitzbodens ) des Schlitzes der herkömmlichen Schlitzschraube die Unterseite des Schraubenkopfes völlig öffnenden Einkerbungen 6 und
   - den beiden Seitenflächen 7.1 und 7.2 der Schraubendreherklinge.
**Fig. 13** : eine Draufsicht des Steckverbindungssystems mit einem Schraubendreher und einer Schraube in Rechtsdrehung ( Hineindrehen ) mit den in Fig. 12 gezeigten Merkmalen aber mit
   - der Seitenfläche 7.1 der Schraubendreherklinge vollflächig seitlich anliegend an der Seitenfläche 4.2 des verbreiterten Schlitzes der Schraube,
   - der Seitenfläche 7.2 der Schraubendreherklinge vollflächig seitlich anliegend an der Seitenfläche 4.4 des verbreiterten Schlitzes der Schraube und
   - den Nasen 3.2 und 3.4, deren Seitenflächen den Schraubenkopf beim Drehen nicht berühren und keine Kraft übertragen.
**Fig. 14**: eine Draufsicht des Steckverbindungssystems mit einem Schraubendreher und einer Schraube in Linksdrehung ( Herausdrehen ) mit den in Fig. 12 gezeigten Merkmalen aber mit
   - der Seitenfläche 7.1 der Schraubendreherklinge vollflächig seitlich anliegend an der Seitenfläche 4.3 des verbreiterten Schlitzes der Schraube,
   - der Seitenfläche 7.2 der Schraubendreherklinge vollflächig seitlich anliegend an der Seitenfläche 4.5 des verbreiterten Schlitzes der Schraube und
   - den Nasen 3.3 und 3.5, deren Seitenflächen den Schraubenkopf beim Drehen nicht berühren und keine Kraft übertragen.

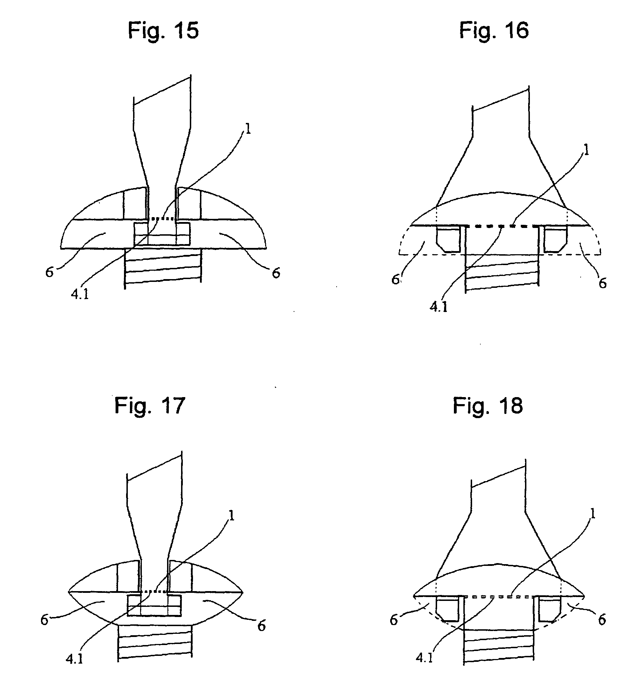

**Fig. 15** : eine Seitenansicht des Steckverbindungssystems mit einem Schraubendreher und einer Schraube (hier: Rundkopfschraube ) und den in Fig. 2, 5 und 9 gezeigten Merkmalen.
**Fig. 16** : eine Seitenansicht des Steckverbindungssystems mit einem Schraubendreher und einer Schraube ( hier: Rundkopfschraube ) gegenüber Fig. 15 um 90° um die Achse der Schraube gedreht und den in Fig. 3, 4 und 10 gezeigten Merkmalen.
**Fig. 17** : eine Seitenansicht des Steckverbindungssystems mit einem Schraubendreher und einer Schraube (hier: Linsenkopfschraube ) und den in Fig. 2, 5 und 9 gezeigten Merkmalen.
**Fig. 18** : eine Seitenansicht des Steckverbindungssystems mit einem Schraubendreher und einer Schraube ( hier: Linsenkopfschraube ) gegenüber Fig. 17 um 90° um die Achse der Schraube gedreht mit den in Fig. 3, 4 und 10 gezeigten Merkmalen.

Die Zeichnungen stellen eine Schraube und einen nur teilweise veranschaulichten Schraubendreher dar, die zusammen eine Schraube/Schraubendreher-Paarung bilden.

Die Schraube weist einen zylinderförmigen Schaft 9 mit einem Gewinde auf, der eine Schraubenachse 17 bestimmt. An einem Ende des Schafts 9 ist mit diesem einstückig ein Kopf 8 ausgebildet, der eine dem Schaft 9 zugewandte, ringförmige Unterseite aufweist.

In dem Kopf 8 sind einander diametral gegenüberliegende Schlitzabschnitte 4,5 ausgebildet, die eine von der Unterseite abgewandte Oberseite des Kopfes 8 unterbrechen und von oben zugänglich sind. In den Ausführungsbeispielen der Schraube sind die Schlitzabschnitte 4,5 von einem diametral durchgehenden Schlitz gebildet.

Der Schraubendreher weist einen Stiel auf, der eine Schraubendreherachse bestimmt und an dessen Ende eine Schneide ausgebildet ist, die in den Schlitz 4 gesteckt werden kann. Dabei taucht die Schneide mit ihrer gesamten Breite in den Schlitz 4 ein, wohingegen an der Schneide Schneidenfortsätze 2 ausgebildet sind, die in die Schlitzabschnitte 4,5 greifen. In jedem Fall kann über die Schneide bzw. die Schneidenfortsätze 2 zum Ein- oder Ausschrauben Drehmoment vom Schraubendreher auf die Schraube übertragen werden.

Der Stiel kann wie üblich mit einem Griff versehen oder zum Anschließen an ein Betätigungswerkzeug ausgebildet sein. Der Schraubendreher kann dabei beispielsweise mit einem Sechskantprofil versehen und als Werkzeugeinsatz gestaltet sein.

Im Kopf 8 sind zwei Hinterschneidungen 6 angeordnet, die sich nach unten an die diametralen Endbereiche des Schlitzes 4 anschließen.

In seinem radial inneren Bereich weist der Kopf 8 eine Aufstandsfläche 4.1 auf, an der sich die Schneide des Schraubendrehers im eingesetzten Zustand z.B. beim Einschrauben abstützen kann. Die Hinterschneidungen 6 liegen im wesentlichen unterhalb dieser Aufstandsfläche 4.1 und sind an der Unterseite des Kopfes 8 offen.

Bei den Ausführungsbeispielen bilden die Hinterschneidungen 6 je eine Aussparung, die in axialer Richtung etwa auf der Höhe der Aufstandsfläche 4.1 beginnt und zum Schaft 9 hin offen ist. In den Ausführungsbeispielen gemäß Fig. 15 bis 18 erstrecken sich die Hinterschneidungen 6 tangential zum Schaft 9 durch den gesamten Kopf 8.

Der Schlitz 4 weist Flanken auf, von denen sich je zwei Flanken gegenüberliegen, radial nach außen divergieren. Der Schlitz 4 ist in seinem Mittelbereich mindestens so breit, daß die Schneide mit Spiel axial eingeführt werden kann.

Die Schneide hat zwei parallele Seitenflächen 7.1 sowie 7.2 und weist an ihrem dem Stiel gegenüberliegenden Ende im Mittelbereich einen im wesentlichen achsnormalen Stützrand 1 auf. Dieser Stützrand 1 kann beim Einsetzen in den Kopf der Schraube 8 an dessen Aufstandsfläche 4.1 angesetzt werden. An beiden Enden des Stützrandes 1 ist mit der Schneide bzw. den Schneidenfortsätzen 2 je eine von zwei Nasen 3 einstückig ausgebildet, die axial über den Stützrand 1 hinausragen und dicker als die Schneide sind. Die Nasen 3 weisen zur Schneide gewandte, achsnormale Flächen auf, die mit den Stirnflächen der Schraube zusammenwirken.

Die Nasen 3 weisen ferner von der Schneide abgewandte äußere Endbereiche 2.1 und 3.1 auf, die so abgeschrägt sind, daß sie beim Eindrehen der Schraube nicht in Kontakt mit einem Werkstück kommt, in das die Schraube eingeschraubt wird. Beim in Fig. 4 dargestellten Schraubendreher sind die Endbereiche 2.1 und 3.1 an die Form der Unterseite der Schraube aus Fig. 1 - also an die Form einer Senkkopfschraube angepaßt. Mit einem derartigen Schraubendreher können auch Rundkopfschrauben oder Linsenkopfschrauben geschraubt werden, wie in Fig. 15 bis 18 dargestellt ist.

Der Schlitz 4 ist radial außen so breit, daß die Schneide des Schraubendrehers mit ihren Nasen 3 ohne besondere Aufmerksamkeit eingesteckt werden kann.

In Fig. 8 bis 14 ist eine Paarung des Schraubendrehers mit einer Senkkopfschraube, in Fig. 15 und 16 mit einer Rundkopfschraube sowie in Fig. 17 und 18 mit einer Linsenkopfschraube dargestellt. Die Nasen 3 sind in je eine Hinterschneidung 6 eingeführt. Beim Drehen des Schraubendrehers, beispielsweise im Uhrzeigersinn (Fig. 13), gelangen die Flächen 3.2 und 3.4 der Nasen 3 in Deckung mit den Stirnflächen 4.2 bzw. 4.4 der Hinterschneidungen 6. Der Schraubendreher ist damit in den Kopf 8 der Schraube eingehakt und muß beim weiteren Drehen, was bei den dargestellten Ausführungsbeispielen einem Einschrauben der Schraube entspricht, nicht angedrückt werden. Durch kurzes Rückdrehen können die Nasen 3 in Deckung mit dem Schlitz 4 gebracht werden, so daß die Schneide wieder aus dem Kopf 8 gezogen werden kann.

In Fig. 11 und 13 ist ein Ausführungsbeispiel dargestellt bei dem die Schneide mit ihren parallelen, ebenen Flächen 7.1 und 7.2 an den Flanken 4.3 und 4.4 des Schlitzes 4 anliegt. Da die Kontaktfläche zwischen der Schneide und dem Kopf 8 dabei groß ist, kann ein großes Drehmoment übertragen werden.

## Patentansprüche

1. Schraubendreher, verbindbar mit Schlitzschrauben gemäß Anspruch 2, mit einer Schraubendreherklinge ( 7 ), deren schraubenseitiges Ende einen Auflagebereich ( 1 ) zum Einsetzen in einen Schlitz (4) eines Schraubenkopfes (8) der Schlitzschraube und beidseitig an den Auflagebereich ( 1 ) anschließende, über den Teil ( 4.1 ) des Schlitzes ( 4 ), den der Auflagebereich ( 1 ) berührt, hinausragende Abschnitte ( 1.1 ) aufweist, welche schraubenseitig mit Verlängerungen ( 2 ) versehen sind, wobei
• diese Verlängerungen ( 2 ) in einem solchen Abstand zum Auflagebereich ( 1 ) vorgesehen sind, daß sie die Funktionsfähigkeit des Schraubendrehers beim Hinein- und Herausdrehen der Schlitzschraube nicht behindern,
• die Außenkanten ( 2.1 ) der Verlängerungen ( 2 ) des Schraubendrehers soweit abgeschrägt sind, daß eine Berührung dieser Verlängerungen mit dem Werkstück bevor der Schraubenkopf ( 8 ) dies kann, - auch bei Senkkopfschrauben und Linsensenkkopfschrauben - unmöglich ist,
• die Verlängerungen ( 2 ) des Schraubendrehers an ihren jeweils beiden Außenseiten durch Nasen ( 3 ) verstärkt sind,
• die Nasen (3) in einem solchen Abstand zum Auflagebereich ( 1 ) angesetzt sind, daß sie die Funktionsfähigkeit des Schraubendrehers beim Hinein- und Herausdrehen der Schlitzschraube und die Aufnahme der Nasen ( 3 ) in als Widerlager für die Nasen wirkende Einkerbungen (6), welche an der durch die Einkerbungen geöffneten Unterseite des Schraubenkopfes ( 8 ) und unterhalb der Auflagefläche ( 4.1 ) für die Schraubendreherklinge ( 7 ) im Schlitz ( 4 ) des Schraubenkopfes ( 8 ) vorgesehen sind, nicht behindern, und
• die Außenkanten ( 3.1 ) der Nasen(3 ) entsprechend den Abschrägungen ( 2.1 ) der Verlängerungen ( 2 ) des Schraubendrehers so weit abgeschrägt sind, daß eine Berührung dieser Nasen mit dem Werkstück bevor der Schraubenkopf ( 8 ) dies kann, - auch bei Senkkopfschrauben und Linsensenkkopfschrauben - unmöglich ist.

2. Schraube, verbindbar mit einem Schraubendreher gemäß Anspruch 1, mit einem Schraubenkopf ( 8 ), in dem ein Schlitz ( 4 ) ausgebildet ist, welcher eine Auflagefläche ( 4.1 ) für eine Schraubendreherklinge ( 7 ) aufweist, wobei
• der Schlitz ( 4 ) oberhalb der Auflagefläche ( 4.1 ) von der Mitte der beiden Außenseiten ( 4.2, 4.3 und 4.4, 4.5 ) des Schlitzes ( 4 ) nach beiden Seiten derart verbreitert ist, daß er um Nasen ( 3 ) verstärkte Verlängerungen ( 2 ) eines Schraubendrehers aufnehmen kann, ohne daß ein Hindurchstecken der Nasen ( 3 ) durch den Schlitz ( 4 ) von den seitlichen Flächen des Schlitzes behindert wird,
• der Winkel, den diese beiden Verbreiterungen ( 5 ) bilden, so bemessen ist, daß die Seitenflächen ( 7.1, 7.2 ) des Schraubendrehers und die Seitenflächen ( 4.2 bis 4.5 ) des verbreiterten Schlitzes ( 4 ) beim Hinein- und Herausdrehen der Schraube vollflächig aneinander liegen,
• die Unterseite des Schraubenkopfes ( 8 ) im Bereich der Verbreiterungen ( 5 ) unterhalb der Auflagefläche ( 4.1 ) mit zwei in gleicher Weise wie die Verbreiterungen ( 5 ) des Schlitzes ( 4 ) gegenüberliegenden Einkerbungen ( 6 ) versehen ist, die reibungslos als Widerlager für die durch den Schlitz ( 4 ) hindurchgesteckten Nasen ( 3 ) wirken,
• diese beiden Einkerbungen ( 6 ) die Unterseite des Schraubenkopfes öffnen und
• diese beiden Einkerbungen (6) ausreichend Raum als Widerlager zur Aufnahme der Nasen (3) bieten, ohne daß die Nasen beim Hinein- und Herausdrehen der Schraube den Schraubenkopf berühren und Kraft übertragen können.

3. Steckverbindungssystem mit einem Schraubendreher gemäß Anspruch 1 und einer Schraube gemäß Anspruch 2, wobei
• der Schraubendreher und die Schraube, soweit wie ohne Funktionsbehinderung möglich, derart ineinandergesteckt sind, daß beim Hinein- und Herausdrehen der Schraube jeweils zwei diagonal gegenüberliegende Nasen (3) in die als Widerlager wirkenden Einkerbungen (6) an der Unterseite des Schraubenkopfes (8) und unterhalb der Auflagefläche (4.1) für die Schraubendreherklinge (7) des Schlitzes (4) aufgenommen sind, und
• die Verlängerungen (2) des Schraubendrehers, die Nasen (3), die Verbreiterungen (5) des Schlitzes (4) und die Einkerbungen (6) an der Unterseite des Schraubenkopfes (8) so bemessen und aufeinander abgestimmt sind, daß die Nasen (3) beim Hinein- und Herausdrehen der Schraube den Schraubenkopf (8) innerhalb der Einkerbungen (6) nicht berühren können, bevor die seitlichen Flächen der Schraubendreherklinge (7.1, 7.2) vollflächig an den seitlichen Flächen (4.2, 4.3, 4.4, 4.5) des verbreiterten Schlitzes (4) anliegen.

## Claims

1. A screwdriver which can be inserted into grooved screws as claimed in claim 2, with a screwdriver blade (7), whose screw-side end has a support area (1) to insert into the groove (4) of a bolt head (8) of the grooved screw. At either end of the support area, which fits on to the part (4.1) of the groove (4) which the support area (1) touches, there are protruding ends (1.1) with screw-side extentions (2).
What is claimed is:
- Extensions (2) are at such a distance from support area (1) so as not to hinder the functioning of the screwdriver when the grooved screw is tightened or loosened.
- The outer edges (2.1) of the extensions (2) of the screwdriver are beveled in such a way that it is impossible for these extensions to touch the object to be worked on before the bolt head (8) can touch it- even when engaging head bolts and raised countersunk head screws.
- Each of the extensions (2) of the screwdriver is reinforced with noses (3) at their two outer edges.
- The noses (3) are at such a distance to the support area (1) so as not to hinder the functioning of the screwdriver when the grooved screw is tightened or loosened or when the noses (3) are engaged in the notches (6) which serve as a counter force to the noses (3). The notches (6) are at the notched, open inner face of the bolt head (8) beneath the support surface (4.1) of the screwdriver blade (7) in the groove (4) of the bolt head (8).
- The outer edges (3.1) of the noses (3) are beveled in correspondance with the beveling (2.1) of the extensions (2) of the screwdriver in such a manner that is is impossible for the noses to touch the object to be worked on before the bolt head (8) can touch it- even when engaging flat head bolts and raised countersunk head screws.

2. A screw into which a screwdriver can be inserted as claimed in claim 1, with a bolt head (8) in which a groove (4) is cut, with a support surface (4.1) for a screwdriver blade (7).
What is claimed is :
- The groove (4) above the support surface (4.1) extends from the centre of the two outer faces (4.2, 4.3, and 4.4, 4.5) of the groove (4) to the two sides so that it can support the screwdriver extensions (2) reinforced by the noses (3) without the lateral faces of the groove (4) preventing the noses (3) from engaging into the groove (4).
- The angle which these two enlargements (5) form is so calculated that the lateral faces (7.1, 7.2) of the screwdriver and the lateral faces (4.2 to 4.5) of the enlarged groove (4) align along the entire surface when the screw is tightened and loosened.
- The underside of the bolt head (8) in the area of the enlargements (5) beneath the support surface (4.1) has two notches (6) which are situated opposite to each other in the same way that the enlargements (5) of the groove (4) are and which function without friction as counter supports to the noses (3) engaged in the groove (4).
- The two notches (6) open the inner side of the bolt head and
- The two notches (6) offer enough space as counter support for supporting the noses (3) without having the noses touch the bolt head when the screw is tightened or loosened, hence transmitting force.

3. Connecting system with a screwdriver as claimed in claim 1 and with a screw as claimed in claim 2.
What is claimed is :
- Screwdriver and screw engage to a depth which does not hinder the functioning, so that by screwing/unscrewing the screw, each of the noses (3) situated diagonally on opposite sides and engaged into the notches (6), functioning as counter supports on the inner face of the bolt head (8) and beneath the support surface (4.1) for the screwdriver blade (7) of the groove (4) and
- The extensions (2) of the screwdriver, noses (3), enlargements (5) of the groove (4) and the notches (6) at the inner side of the bolt head (8) are calculated in such a way as to fit each other, so that when the screw is tightened and loosened, the noses (3) cannot touch the bolt head (8) inside the notches (6), before the lateral faces of the screwdriver blade (7.1, 7.2) align with the lateral faces (4.2, 4.3, 4.4, 4.5) of the enlarged groove (4).

## Revendications

1. Tournevis pouvant être connecté à des vis à fente correspondant aux termes de la spécification 2, avec une lame de tournevis (7), dont le bout côté vis dispose d'une surface d'appui (1) pour insertion dans une fente (4) d'une tête de vis (8) d'une vis à fente ainsi que de parties dépassantes (1.1) adjacentes aux deux côtés de la surface d'appui (1), dépassant la partie (4.1) de la fente (4) touchée par la surface d'appui (1) et équipées d'extensions (2) côté vis,
• ces extensions (2) étant prévues à une telle distance de la surface d'appui (1) qu'elles ne gênent pas le bon fonctionnement du tournevis ni lorsque la vis à fente est vissée ni lorsqu'elle est dévissée,
• les faces extérieures (2.1) des extensions (2) du tournevis étant biseautées de telle manière qu'il est impossible que ces extensions touchent la pièce à travailler avant que la tête de vis (8) ne touche elle-même celle-ci - même s'il s'agit d'une vis à tête conique ou d'une vis à tête conique bombée,
• les extensions (2) du tournevis étant renforcées de talons (3) sur les deux côtés extérieurs respectifs,
• les talons (3) étant positionnés à une telle distance de la surface d'appui (1) qu'ils ne gênent pas le bon fonctionnement du tournevis ni lorsque la vis à fente est vissée ni lorsqu'elle est dévissée, et qu'ils ne gênent pas non plus l'insertion des talons (3) dans les entailles (6) servant de butée aux talons et prévues sur la face inférieure de la tête de vis (8) ainsi ouverte par ces entailles en dessous de la surface d'appui (4.1) pour la lame de tournevis (7) de la fente (4) de la tête de vis (8), et
• les faces extérieures (3.1) des talons (3) étant biseautées en fonction de l'angle d'inclinaison (2.1) des extensions (2) du tournevis de manière à ce qu'il soit impossible que ces talons touchent la pièce à travailler avant que la tête de vis (8) ne touche elle-même celle-ci - même s'il s'agit d'une vis à tête conique ou d'une vis à tête conique bombée.

2. Vis pouvant être connectée à un tournevis correspondant aux termes de la spécification 1, avec une tête de vis (8) dans laquelle se trouve une fente (4) qui dispose d'une surface d'appui (4.1) pour une lame de tournevis (7) et dont
• la fente (4) au-dessus de la surface d'appui (4.1) est élargie des deux côtés à partir du centre des deux côtés extérieurs (4.2, 4.3 et 4.4, 4.5) de la fente (4) de sorte qu'elle puisse recevoir les extensions (2) renforcées par des talons (3) d'un tournevis sans que les côtés latéraux de la fente gênent les talons (3) quand ils sont enfoncés à travers la fente (4),
• l'angle formé par ces deux élargissements (5) est dimensionné de sorte que les côtés latéraux (7.1, 7.2) du tournevis et les côtés latéraux (4.2 à 4.5) de la fente élargie (4) se touchent sur la totalité de leur surface latérale lorsque la vis est vissée ou dévissée.
• la face inférieure de la tête de la vis (8) est équipée dans sa partie élargie (5) au-dessous de la surface d'appui (4.1) de deux entailles (6) se trouvant à l'opposé l'une de l'autre de la même façon que les élargissements (5) de la fente (4) et fonctionnant sans aucune friction en tant que butée pour les talons (3) enfoncés à travers la fente (4),
• ces deux entailles (6) ouvrent la face inférieure de la tête de la vis et
• ces deux entailles (6) offrent assez de place en tant que butée pour l'introduction des talons (3), sans que ceux-ci ne touchent la tête de vis lorsque la vis est vissée ou dévissée ni qu'ils puissent transmettre de force.

3. Système de connexion par enfichage d'un tournevis aux termes de la spécification 1 et d'une vis aux termes de la spécification 2, de nature à ce que
• le tournevis et la vis soient, sans pour autant gêner le bon fonctionnement, emboîtés l'un dans l'autre de manière à ce que quand la vis est vissée ou dévissée, les deux talons (3) se trouvant diagonalement opposés sont introduits dans les entailles (6) de la face inférieure de la tête de vis (8) et au-dessous de la surface d'appui (4.1) pour la lame de tournevis (7) de la fente (4) et que
• les extensions (2) du tournevis, les talons (3), les élargissements (5) de la fente (4) et les entailles (6) à la face inférieure de la tête de vis (8) soient dimensionnés et ajustés entre eux de telle façon que les talons (3) ne puissent pas toucher la tête de vis (8) à l'intérieur des entailles (6) lorsque la vis est vissée ou dévissée avant que les côtes latéraux de la lame de tournevis (7.1, 7.2) ne touchent les côtes latéraux (4.2, 4.3, 4.4, 4.5) de la fente élargie (4) avec l'intégralité de leur surface latérale.
